# EUROPEAN PATENT APPLICATION

(11) **EP 4 510 311 A1**
(43) Date of publication of application: **19.02.2025**
(21) Application number: 22952745.2
(22) Date of filing: 29.09.2022
(51) Int. Cl.: H01M 10/6557, H01M 10/647

(54) **THERMAL MANAGEMENT COMPONENT, BATTERY AND ELECTRIC DEVICE**

(30) Priority: 25.07.2022 CN 202221914675 U
(71) Applicant: Contemporary Amperex Technology Co., Limited, Ningde, Fujian 352100 (CN)
(72) Inventor: LI, Xingxing, Ningde, Fujian 352100 (CN); CHEN, Zhiming, Ningde, Fujian 352100 (CN); HUANG, Xiaoteng, Ningde, Fujian 352100 (CN)
(74) Representative: Rowlands, Stuart Michael
(86) International application number: PCT/CN2022/122808
(87) International publication number: WO 2024/021304

(57) **Abstract**

Disclosed in the present application are a thermal management component, a battery and an electric device. The thermal management component for use in the battery is internally provided with a first cavity and a second cavity, which are arranged in the thickness direction of the thermal management component, wherein the first cavity is configured to accommodate a heat transfer medium, so as to adjust the temperature of a battery cell, and the second cavity is configured to be deformable, so as to absorb a pressing force applied to the thermal management component. By means of the technical solution provided in the present application, the safety of the battery can be improved.

## Description

### Cross Reference to Related Applications

The present application claims the priority of Chinese patent application no. 202221914675.3, entitled "Thermal Management Component, Battery, and Power Consuming Device" and filed on July 25, 2022, which is incorporated herein by reference in its entirety.

### Technical Field

The present application relates to the technical field of batteries, and more particularly to a thermal management component, a battery, and a power consuming device.

### Background Art

Energy conservation and emission reduction is the key to the sustainable development of the automotive industry. Electric vehicles have become an important part of the sustainable development of the automotive industry due to their advantages in energy conservation and environmental protection. For the electric vehicles, the battery technology is an important factor to their development.

In the development of battery technology, how to improve the safety of batteries is an urgent technical problem that needs to be solved in battery technology.

### Summary of the Invention

The present application provides a thermal management component, a battery, and a power consuming device. The technical solution provided by the present application can improve the safety of batteries.

The present application is realized through the following technical solutions:
In a first aspect, the present application provides a thermal management component, applicable to a battery, wherein a first cavity and a second cavity are formed inside the thermal management component, and the first cavity and the second cavity are arranged along a thickness direction of the thermal management component, wherein the first cavity is configured to accommodate a heat exchange medium to adjust a temperature of a battery cell, and the second cavity is configured to absorb a squeezing force on the thermal management component through deformation.

In the above solution, the deformation of the second cavity is used to absorb the squeezing force on the thermal management component, thereby avoiding the first cavity from affecting the flow of the heat exchange medium therein due to the squeezing force, and ensuring the heat exchange effect of the heat exchange medium on the battery cells, thus making the battery highly safe.

According to some embodiments of the present application, the thermal management component is provided with a first wall shared by the first cavity and the second cavity.

In the above solution, since the first cavity and the second cavity share the same wall, the structure of the thermal management component can be simplified as much as possible, making it easy to manufacture and improving the energy density of the battery cell.

According to some embodiments of the present application, the thermal management component is provided with a second wall, the first wall and the second wall are arranged oppositely along the thickness direction of the thermal management component, and the second cavity is formed between the first wall and the second wall.

In the above solution, the second cavity is located between the first wall and the second wall. When the thermal management component is subjected to an external force, the second wall deforms in the direction of the first wall, and the volume of the second cavity is reduced to absorb the impact of the external force on the thermal management component. It is ensured that the first cavity is not affected by external force, so that the heat exchange medium in the first cavity can effectively exchange heat with the battery cells.

According to some embodiments of the present application, the thermal management component further includes a thermal conductive member, disposed inside the second cavity, wherein one end of the thermal conductive member is connected to the first wall, and the other end of the thermal conductive member is connected to the second wall.

In the above solution, in some embodiments, the thermal management component can be located between two battery cells, and the medium in the first cavity can adjust the temperature of the two battery cells. To ensure the efficiency of temperature adjustment, a thermal conductive device is provided in the second cavity, so as to enable heat exchange between the medium in the first cavity and the battery cell away from the first cavity through the themal conductive member.

According to some embodiments of the present application, the thermal conductive member is inclined to the first wall and the second wall.

In the above solution, generally, the squeezing force on the thermal management component is mainly the expansion force of the battery cells, and the direction of the expansion force roughly corresponds to the thickness direction of the thermal management component. when the thermal management component is subjected to squeezing force, the inclined thermal conductive member can easily deform, which helps the second cavity absorb the squeezing force and reduces the impact on the first cavity.

According to some embodiments of the present application, an angle between the thermal conductive member and the first wall is a, where 45°≤ a<90°.

In the above solution, when the angle a between the thermal conductive member and the first wall is <45°, and the size of the thermal conductive member is fixed, the gap between the second wall and the first wall is smaller, the volume of the second cavity is smaller, and less of the squeezing force can absorbed. When the angle a between the thermal conductive member and the first wall is 90°, the thermal conductive member can be perpendicular to the first wall and the second wall. When the thermal conductive member is subject to the squeezing force, it is not conducive to the deformation of the second cavity, that is, the squeezing force is prone to being transfered to the first cavity, which affects the safety of the battery. For this reason, the embodiments of the present application limit the angle a between the themal conductive member and the first wall to 45°≤ a<90°, so that the second cavity has better buffering capacity, ensuring the safety of the battery.

According to some embodiments of the present application, the thermal conductive member extends along a first direction, wherein there are a plurality of the thermal conductive members, which are arranged at intervals along a second direction, wherein the first direction, the second direction, and the thickness direction of the thermal management component are perpendicular to each other.

In the above solution, on the one hand, by providing multiple thermal conductive members, the thermal management effect of the medium in the first cavity on the battery cells facing away from the first cavity can be ensured, so that the battery has higher safety. On the other hand, each thermal conductive member extends along the first direction, and two adjacent thermal conductive members are parallel to each other in the second direction, so that when the thermal management component is subjected to the squeezing force, the second cavity can be evenly stressed, and the squeezing force is fully absorbed.

According to some embodiments of the present application, a spacing between two adjacent thermal conductive members is b, where 5mm≤ b ≤ 100mm.

In the above solution, when the spacing b between two adjacent thermal conductive members is <5mm, the thermal conductive members distribute densely, which is not conducive to the deformation of the second cavity; when the spacing b between two adjacent thermal conductive members is >100mm, the thermal conductive members distribute sparsely, which is not conducive to the deformation of the first cavity. For this reason, the embodiments of the present application limit the spacing b between two adjacent thermal conductive members to 5 mm ≤ b ≤ 100 mm, which enables the second cavity to effectively absorb the squeezing force while ensuring effective adjustment of the temperature of the battery cells, making the battery highly safe.

According to some embodiments of the present application, the thermal management component is provided with a third wall, the first wall and the third wall are arranged oppositely along the thickness direction of the thermal management component, and the first cavity is formed between the first wall and the third wall.

In the above solution, the third wall and the first wall are arranged oppositely along the thickness direction of the thermal management component, and form a first cavity that can accommodate the medium, so that the temperature of the battery cells can be adjusted.

According to some embodiments of the present application, the thermal management component further includes: a reinforcement member, arranged inside the first cavity, wherein one end of the reinforcement member is connected to the first wall, and the other end of the reinforcement member is connected to the third wall.

In the above solution, by arranging the reinforcement in the first cavity, the structural strength of the first cavity is improved, the risk of deformation of the first wall and the second wall due to squeezing force is reduced, ensuring that the volume of the first cavity is relatively constant, and the medium in the first cavity is not affected by the squeezing force, so that the temperature of the battery cells is adjusted effectively.

According to some embodiments of the present application, the reinforcement member is perpendicular to the first wall and the third wall.

In the above solution, generally, the squeezing force on the thermal management is mainly the expansion force of the battery cells, and the direction of the expansion force roughly corresponds to the thickness direction of the thermal management component. When the thermal management component is subjected to squeezing force, the reinforcements arranged perpendicular to the first wall and the third wall can effectively resist the squeezing force, ensuring that the first wall and the third wall do not deform, that is, ensuring that the first cavity does not deform.

According to some embodiments of the present application, a size of the first cavity in the thickness direction of the thermal management component is w1, and a size of the second cavity in the thickness direction of the thermal management component is w2, where 0.2 ≤ w1/w2 ≤ 1.5.

In the above solution, when w1/w2<0.2, it means that the thermal management component has less volume to accommodate the medium. That is, the less medium that adjusts the temperature of the battery cells, the worse the thermal management effect . When w1/w2 >1.5, it means that the smaller the thickness of the second cavity, the worse its buffering capacity. For this reason, in the embodiments of the present application, w1/w2 is limited to 0.2≤w1/w2≤1.5, so that the thermal management component still has good buffering capacity under the condition of strong thermal management effect, making the battery highly safe.

According to some embodiments of the present application, the second cavity is formed with a first opening and a second opening opposite to each other along a first direction, and the first opening and the second opening are respectively communicated with an inside of the first cavity, wherein the first direction is perpendicular to the thickness direction of thermal management component.

In the above solution, along the first direction, the opposite ends of the second cavity are open, that is, the first opening and the second opening, compared with the solution in which the opposite ends are closed, when subjected to the squeezing force, can deform more easily to absorb energy, thereby having better buffering capacity, effectively reducing the impact of the squeezing force on the first cavity, and making the battery highly safe.

According to some embodiments of the present application, the thermal management component further includes a first current collector and a second current collector, and the first current collector and the second current collector are respectively connected to two ends of the first cavity which are arranged oppositely along a first direction, wherein the first direction is perpendicular to the thickness direction of the thermal management component.

In the above solution, by arranging the first current collector and the second current collector, the medium can be input into the first cavity and output from the first cavity, achieving circulation of the medium, so that the temperature of the battery cells can be effectively adjusted.

In a second aspect, the present application provides a battery, including: a box; battery cell, accommodated in the box; and the thermal management component according to any of items in the first aspect, disposed in the box, and configured to adjust a temperature of the battery cell.

According to some embodiments of the present application, the battery cells are arranged on both sides of the thermal management component in the thickness direction.

In a third aspect, the present application provides a power consuming device, including the battery according to any of items in the second aspect, wherein the battery is configured to provide electrical energy.

Additional aspects and advantages of the present application will be set forth in part in the description below, and will become obvious in part from the description below, or be learned by practice of the present application.

### Brief Description of the Drawings

In order to more clearly illustrate the technical solutions of the embodiments of the present application, the drawings to be used in the description of the embodiments of the present application will be described briefly below. It should be understood that the drawings below merely show some embodiments of the present application, and should not be considered as limitation to the scopes. For those skilled in the art, other drawings can also be obtained according to these drawings without any creative effort.
FIG. 1 is a schematic structural diagram of a vehicle provided in some embodiments of the present application;
FIG. 2 is a three-dimensional exploded view of a battery provided in some embodiments of the present application;
FIG. 3 is a schematic diagram of a thermal management component provided in some embodiments of the present application;
FIG. 4 is a sectional view in A-A direction in FIG. 3;
FIG. 5 is a schematic diagram of a first cavity and a second cavity provided in some embodiments of the present application;
FIG. 6 is a perspective view of the thermal management component provided in some embodiments of the present application;
FIG. 7 is an enlarged view of B in FIG. 6 in some embodiments of the present application;
FIG. 8 is a schematic diagram of battery cells and the thermal management component provided in some embodiments of the present application; and
FIG. 9 is an enlarged view of C in FIG. 8.

Reference numerals: 10 - thermal management component; 11- first cavity; 12 - second cavity; 13 - first wall; 14 - second wall; 14a - side wall; 15 - third wall; 16 - fourth wall; 16 - thermal conductive member; 17 - reinforcement member; 120 - first opening; 18 - first current collector; 19 - second current collector; x - thickness direction; y - first direction; z - second direction; 1000 - vehicle; 200 - controller; 300 - motor; 100 - battery; 20 - box; 21 - first part; 22 - second part; 30 - battery cell.

### Detailed Description of Embodiments

The embodiments of the technical solution of the present application will be described in detail below in conjunction with the accompanying drawings. The following embodiments are only used to illustrate the technical solution of the present application more clearly, and are therefore only used as examples and cannot be used to limit the protection scope of the present application.

Unless otherwise defined, all technical and scientific terms used herein have the same meaning as commonly understood by those skilled in the technical field belonging to the present application; the terms used herein are only for the purpose of describing specific embodiments, but are not intended to limit the present application; the terms "including" and "having" and any variations thereof in the description and claims of the present application and the brief description of the drawings above are intended to cover non-exclusive inclusion.

In the description of the embodiments of the present application, the technical terms such as "first" and "second" are used merely to distinguish different objects, and should not be understood as indicating or implying relative importance or implicitly indicating the number, the specific order or the primary and secondary relationship of the indicated technical features. In the description of the embodiments of the present application, the phrase "a plurality of" means two or more, unless otherwise specifically and specifically defined.

Reference herein to "an embodiment" means that a particular feature, structure, or characteristic described in connection with the embodiment can be included in at least one embodiment of the present application. The appearances of this phrase in various places in the description are not necessarily all referring to the same embodiment, nor are separate or alternative embodiments mutually exclusive of other embodiments. Those skilled in the art understand, both explicitly and implicitly, that the embodiments described herein may be combined with other embodiments.

In the description of the embodiments of the present application, the term "and/or" is only an association relationship describing associated objects, indicating that there can be three relationships, such as A and/or B, which can mean: there are three situations: A, both and B, and B. In addition, the character "/" herein generally indicates that the related objects are in an "or" relationship.

In the description of the embodiments of the present application, the term "multiple" refers to more than two (including two), and similarly, "multiple groups" refers to more than two groups (including two groups), and "multiple Pieces" refers to two or more pieces (including two pieces).

In the description of the embodiments of the present application, the orientation or position relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", etc. are on the basis of the orientation or position relationships shown in the accompanying drawings, and are only for ease of description of the embodiments of the present application and for simplifying the description, rather than indicating or implying that the devices or elements referred to must have specific orientations or be constructed and operated in specific orientations, and thus will not be understood as limiting the embodiments of the present application.

In the description of the embodiments of the present application, unless otherwise explicitly and specified and defined, the technical terms "mounting", "connecting", "connection", "fixing", etc. should be understood in a broad sense, for example, may be fixed connection, detachable connection or integration, or may be either mechanical connection, or electrical connection or signal connection, or may be either direct connection or indirect connection through an intermediate medium, or may be the relationship of the communication of interiors of two elements or the interaction of two elements. For those of ordinary skill in the art, the specific meaning of the above terms in the embodiments of the present application can be understood according to specific situations.

In the present application, a battery cell may include a lithium-ion secondary battery, a lithium-ion primary battery, a lithium-sulfur battery, a sodium/lithium- ion battery, a sodium-ion battery or a magnesium-ion battery, etc., which is not limited by the embodiments of the present application. The battery cell may cuboid or in another shape, which is not limited by the embodiments of the present application.

The battery cell includes an electrode assembly and an electrolyte, the electrode assembly being composed of a positive electrode plate, a negative electrode plate and an isolation film. The operation of the battery cell mainly relies on the movement of metal ions between the positive electrode plate and the negative electrode plate. The positive electrode plate includes a positive electrode current collector and a positive electrode active material layer. The surface of the positive electrode current collector is coated with the positive electrode active material layer, the positive electrode current collector not coated with the positive electrode active material layer protrudes from the positive electrode current collector coated with the positive electrode active material layer, and the positive electrode current collector not coated with the positive electrode active material layer is used as a positive electrode tab. Taking a lithium-ion battery as an example, the material of the positive electrode current collector may be aluminum, and the positive electrode active material may be lithium cobalt oxides, lithium iron phosphate, ternary lithium or lithium manganate, etc. The negative electrode plate includes a negative electrode current collector and a negative electrode active material layer. The surface of the negative electrode current collector is coated with the negative electrode active material layer, the negative electrode current collector not coated with the negative electrode active material layer protrudes from the negative electrode current collector coated with the negative electrode active material layer, and the negative electrode current collector not coated with the negative electrode active material layer is used as a negative electrode tab. The material of the negative electrode current collector may be copper, and a negative electrode active material may be carbon or silicon, etc. In order to ensure that no fusing occurs when a large current passes, a plurality of positive electrode tabs are provided and are stacked together, and a plurality of negative electrode tabs are provided and are stacked together. The material of the isolation film may be PP (polypropylene) or PE (polyethylene), etc. In addition, the electrode assembly may have a winding structure or may have a laminated structure, and the embodiments of the present application are not limited thereto.

The battery mentioned in the embodiments of the present application refers to a single physical module that includes one or more battery cells to provide higher voltage and capacity. The battery also includes a box, one or more battery cells are arranged inside the box, and the box protects the battery cells and prevents the battery cells from being affected by external objects.

The development of battery technology should consider multiple design factors at the same time, such as energy density, cycle life, discharge capacity, charge and discharge rate and other performance parameters. In addition, the safety of the battery also needs to be considered. For example, battery thermal runaway can cause the battery to burn or explode, seriously affecting the safety of the battery. Thermal runaway is caused by the fact that the heat generation rate of the battery cells is much higher than the heat dissipation rate, and a large amount of heat accumulates and is not dissipated in time.

In order to improve the safety of the battery, the battery generally further includes a thermal management component therein. The thermal management component is arranged inside the box. A first cavity is formed inside the thermal management component, and is used to accommodate the heat exchange medium to adjust a temperature of the battery cells, so that the battery is within a suitable temperature range to ensure higher safety. The heat exchange medium here can be fluid (liquid) or gas, and adjusting the temperature refers to heating or cooling multiple battery cells. Optionally, the fluid can be circulated to achieve better temperature adjustment. Optionally, the fluid may be water, a mixture of water and ethylene glycol, or air. For example, in the case of cooling or cooling battery cells, the thermal management component is used to contain cooling fluid to lower the temperature of multiple battery cells. At this time, the thermal management component may also be called a cooling component, a cooling system, or a cooling plate and the fluid contained therein may also be called cooling medium or cooling fluid, and more specifically, may be called cooling liquid or cooling gas. When the fluid contained in the thermal management component is cooling water, the thermal management component can also be called a water-cooling plate, which contacts the battery cells and can be used to reduce the temperature of the battery cells, so as to prevent thermal runaway of the battery cells.

However, the inventor found that after a long time use of existing battery, the battery has a greater risk of thermal runaway, which affects the safety of the battery. The inventor's research found that after the battery is used for a long time, the electrochemical and chemical reactions inside the battery cell will increase the internal pressure therein, causing the battery cell to expand. The expansion of the battery cell will squeeze the thermal management component, causing the first cavity of the thermal management component to deform, and a volume of the first cavity to change, making its internal flow resistance increase, affecting the flow rate of the heat exchange medium, so that the heat exchange medium cannot effectively adjust the temperature of the battery cells, the battery is further at risk of thermal runaway, and the safety is low.

In view of this, in order to reduce the impact of the squeezing force on the first cavity of the thermal management component and ensure that the first cavity has a relatively constant volume, so as to reduce the risk of thermal runaway of the battery and improve the safety of the battery, the inventor has conducted in-depth research and designed a thermal management component in which a second cavity is further formed inside the thermal management component, the first cavity and the second cavity are arranged along a thickness direction of the thermal management component, and the second cavity is configured to absorb the squeezing force on the thermal management component through deformation.

In the above solution, the second cavity does not accommodate the heat exchange medium. When the thermal management component is subjected to the squeezing force, the second cavity is forced to deform to absorb the squeezing force, thereby reducing the impact of the squeezing force on the first cavity. This ensures that the thermal management component can effectively adjust the temperature of the battery cell, making the battery highly safe.

The technical solutions described in the embodiments of the present application are applicable to electricity and a power consuming device using the battery.

The power consuming device can be a vehicle, a mobile phone, a portable device, a laptop, a ship, a spacecraft, an electric toy and an electric tool, etc. The vehicle can be a new energy vehicle, which can be a pure electric vehicle, a hybrid vehicle or an extended-range vehicle, etc. The spacecraft includes a airplane, a rocket, a space shuttle, a spaceship, etc. The electric toy includes a fixed or mobile electric toy, such as a game console, an electric car toy, an electric ship toy, an electric airplane toy, etc. The power tool includes a metal-cutting electric tool, a grinding power tool, an assembly electric tool, and a railway electric tool, such as an electric drill, an electric grinder, an electric wrench, an electric screwdriver, an electric hammer, an impact drill, a concrete vibrator and a planer, etc. The embodiments of the present application impose no special restrictions on the above power consuming devices.

In the following embodiments, for convenience of explanation, the electrical equipment is a vehicle 1000 as an example.

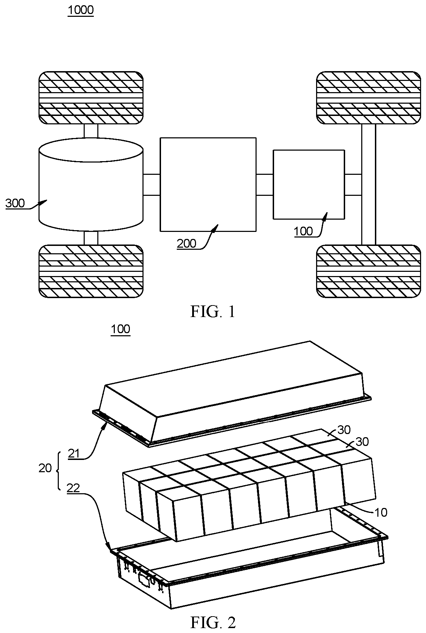

FIG. 1 is a schematic structural diagram of a vehicle 1000 in some embodiments of the present application.

A controller 200, a motor 300, and a battery 100 may be disposed inside the vehicle 1000, and the controller 200 is used to control the battery 100 to power the motor 300. For example, the battery 100 may be disposed at the bottom, front, or rear of the vehicle 1000. The battery 100 can be used to power the vehicle 1000. For example, the battery 100 can be used as an operating power source for the vehicle 1000 and for the circuit system of the vehicle 1000, for example, for the power requirements of starting, navigation, and operating of the vehicle 1000. In another embodiment of the present application, the battery 100 can not only be used as an operating power source for the vehicle 1000, but can also be used as a driving power source for the vehicle 1000, replacing or partially replacing fuel or natural gas to provide driving power for the vehicle 1000.

Please refer to FIG. 2. FIG. 2 is a three-dimensional exploded view of the battery 100 providedin some embodiments of the present application.

The battery 100 includes a box 20, a battery cell 30, and a thermal management component 10. The battery cell 30 and the thermal management component 10 are accommodated in the box 20. Herein, the box 20 is used to provide an accommodation space for the battery cells 30, and the box 20 can adopt a variety of structures. In some embodiments, the box 20 may include a first part 21 and a second part 22, the first part 21 and the second part 22 cover each other, and the first part 21 and the second part 22 jointly define a accommodating space for accommodating the battery cell 30. The second part 22 may be a hollow structure with one end open, and the first part 21 may be a plate-like structure. The first part 21 covers the open side of the second part 22, so that the first part 21 and the second part 22 jointly define a accommodating space; the first part 21 and the second part 22 may further be hollow structures with one side open, where the open side of the first part 21 covers the open side of the second part 22. Certainly, the box 20 formed by the first part 21 and the second part 22 can be in various shapes, such as cylinder, rectangular parallelepiped, etc.

In the battery 100, there may be a plurality of battery cells 30, and the plurality of battery cells 30 may be connected in series, in parallel, or in mixed connection. The mixed connection means that the plurality of battery cells 30 are connected both in series and in parallel. The plurality of battery cells 30 can be directly connected in series or in parallel or in mixed connection together, and then the whole composed of the plurality of battery cells 30 can be accommodated in the box 20. Certainly, the battery 100 can futher be in a form of battery module in which the plurality of battery cells 30 are connected in series, in parallel, or in mixed connection first, then the a plurality of battery modules are connected in series, in parallel, or in mixed connection to form a whole, and are accommodated in the box 20. The battery 100 may further include other structures. For example, the battery 100 may further include a bus component for realizing electrical connections between the plurality of battery cells 30.

In the battery 100, the thermal management component 10 may be one or multiple. The thermal management component 10 may be provided between the plurality of battery cells 30 and the bottom wall of the box 20. The thermal management component 10 may further be provided between two adjacent battery cells 30. For example, in FIG. 2, the thermal management component 10 may be provided between the large surfaces of two adjacent battery cells 30. The large surface of the battery cell 30 refers to a surface of the battery cell 30 with the largest area.

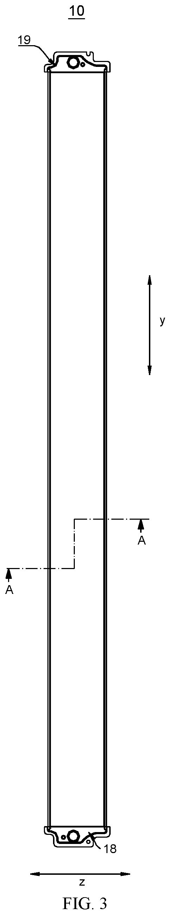

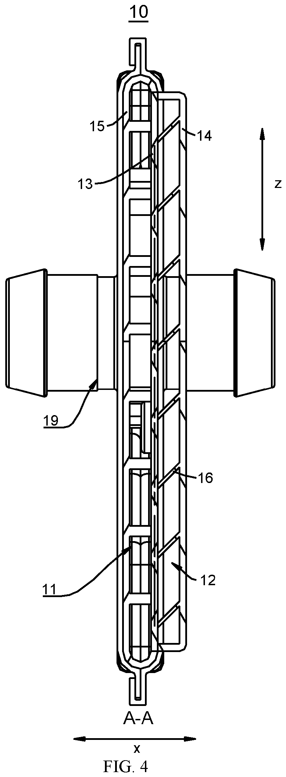

According to some embodiments of the present application, please refer to FIG.s 3 and 4. FIG. 3 is a schematic diagram of the thermal management component 10 provided in some embodiments of the present application, and FIG. 4 is a sectional view in A-A direction in FIG. 3.

The thermal management component 10 is used for a battery. A first cavity 11 and a second cavity 12 are formed inside the thermal management component 10. The first cavity 11 and the second cavity 12 are arranged along the thickness direction x of the thermal management component 10. The first cavity 11 is configured to accommodate the heat exchange medium to adjust a temperature of the battery cell 30, and the second cavity 12 is configured to absorb the squeezing force of the thermal management component 10 through deformation.

The first cavity 11 and the second cavity 12 are independent of each other. The first cavity 11 can accommodate the heat exchange medium and can heat or cool the battery cell 30. The second cavity 12 is a chamber that does not accommodate the heat exchange medium, and is used to deform under a force to reduce the impact of the force on the first cavity 11.

The first cavity 11 and the second cavity 12 are arranged along the thickness direction x of the thermal management component 10. In some embodiments, the surface of the first cavity 11 away from the second cavity 12 is the surface with the largest area of the first cavity 11, and this surface is in contact with the battery cell 30 and can effectively adjust the temperature of the battery cell 30 through the heat exchange medium. Meanwhile, in some embodiments, the surface of the first cavity 11 away from the second cavity 12 may be in contact with a large surface of the battery cell 30, so as to effectively adjust the temperature of the battery cell 30. The large surface of the battery cell 30 is also the main part where the battery cell 30 expands. When the battery cell 30 expands and squeezes the thermal management component 10, the second cavity 12 will deform to absorb the squeezing force. In the present application, the number of the first cavity 11 and the second cavity 12 is not limited. For example, in some embodiments, the thermal management component 10 has one first cavity 11 and one second cavity 12. In other embodiments, the thermal management component 10 has two first cavities 11 and one second cavity 12, and the second cavity 12 is located between the two first cavities 11, or the two first cavities 11 are connected to each other, and one of the two first cavities 11 is connected to the second cavity 12. in some embodiments, the thermal management component 10 has one first cavity 11 and two second cavities 12, and the first cavity 11 can be located between the two second cavities 12. It should be understood that the second cavity 12 can deform to absorb energy due to the squeezing force applied on any part of the thermal management component 10, ensuring that the first cavity 11 is not affected.

In the above solution, the thermal management component 10 uses the second cavity 12 to absorb the squeezing force from the outside (the force of external objects on the battery 100 or the force of the battery cells 30 inside the battery 100 on the thermal management component 10, etc.), avoiding the first cavity from affecting the flow of the heat exchange medium therein due to the squeezing force, thereby ensuring the heat exchange effect of the heat exchange medium on the battery cells 30, further making the battery 100 highly safe.

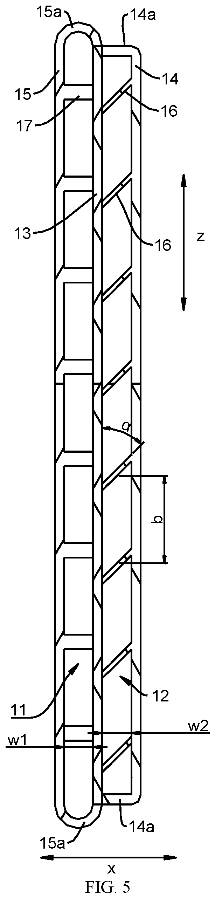

According to some embodiments of the present application, please refer to FIG. 5. FIG. 5 is a schematic diagram of the first cavity 11 and the second cavity 12 provided in some embodiments of the present application.

The thermal management component 10 has a first wall 13 shared by the first cavity 11 and the second cavity 12.

The first wall 13 is a wall shared by the first cavity 11 and the second cavity 12, that is, the first wall 13 can be enclosed with other structures to form a first cavity 11 that can accommodate the heat exchange medium, and the second wall 14 may be a second cavity 12 that is easily deformed to absorb energy formed together with its structure. In some embodiments, the thermal management component 10 may be integrally formed to simultaneously form the first cavity 11 and the second cavity 12.

In the above solution, since the first cavity 11 and the second cavity 12 share a wall, the structure of the thermal management component 10 can be simplified as much as possible, making it easy to manufacture and conducive to the energy density of the battery cell 30.

According to some embodiments of the present application, the thermal management component 10 has a second wall 14, the first wall 13 and the second wall 14 are arranged oppositely along the thickness direction x of the thermal management component 10, and the second cavity 12 is formed between the first wall 13 and the second wall 14.

The second wall 14 is a structure arranged opposite to the first wall 13 along the thickness direction x of the thermal management component 10. The first wall 13 and the second wall 14 are spaced apart from each other, forming a second cavity 12 therebetween. When the thermal management component 10 is subjected to a squeezing force, the second wall 14 can deform toward the first wall 13 to compress the second cavity 12, thereby buffering the energy absorption.

In the above solution, the second cavity 12 is located between the first wall 13 and the second wall 14. When the thermal management component 10 is subjected to an external force, the second wall 14 deforms in the direction of the first wall 13, and the volume of the second cavity 12 is reduced to absorb the impact of external forces on the thermal management component 10, ensuring that the first cavity 11 is not affected by external forces, and ensuring that the heat exchange medium in the first cavity 11 can effectively exchange heat with the battery cells 30.

According to some embodiments of the present application, referring to FIG.s 4 and 5, the thermal management component 10 further includes a thermal conductive member 16, the thermal conductive member 16 is disposed inside the second cavity 12, one end of the thermal conductive member 16 is connected to the first wall 13, and the other end of the thermal conductive member 16 is connected to the second wall 14.

The thermal conductive member 16 is a component connecting the first wall 13 and the second wall 14, and its function may include conducting heat from objects in contact with the second wall 14 to the heat exchange medium in the first cavity 11. For example, when the second wall 14 is in contact with the battery cell 30, the heat on the surface of the battery cell 30 can be transferred to the heat exchange medium through the themal conductive membe 16, or the energy of the heat exchange medium can be transferred to the battery cell 30 through the first wall 13.

In the above solution, in some embodiments, the thermal management component 10 can be located between the two battery cells 30, and the medium in the first cavity 11 can adjust the temperature of the two battery cells 30. In order to ensure the efficiency of temperature adjustment, a thermal conductive member 16 is provided in the second cavity 12, to enable heat exchange between the medium in the first cavity 11 and the battery cell 30 away from the first cavity 11 through the thermal conductive member 16.

In some other embodiments, the themal conductive member 16 may not be provided in the second cavity 12, and the heat of the battery cell 30 in contact with the second wall 14 may be conducted to the heat exchanger medium through the second wall 14 and the first wall 13, so as to achieve heat exchange.

According to some embodiments of the present application, referring to FIG. 5, the thermal conductive member 16 is inclined to the first wall 13 and the second wall 14.

Currently, when the battery cell 30 expands, the direction of the squeezing force applied on the thermal management component 10 is parallel to the thickness direction x of the thermal management component 10. For this reason, in some embodiments, in order to ensure that the second cavity 12 deforms under force, the thermal conductive member 16 can be disposed obliquely between the second wall 14 and the first wall 13. That is, the thermal conductive member 16 is not perpendicular to the first wall 13 and the first wall 13, avoiding the second wall 14 from being not easily to deform toward the first wall 13 due to the support of the thermal conductive member 16.

In the above solution, generally, the squeezing force applied on the thermal management is mainly the expansion force of the battery cell 30, and the direction of the expansion force roughly corresponds to the thickness direction x of the thermal management component 10. When the thermal management component 10 is subjected to squeezing force, the inclined themal conductive member 16 can easily deform, which in turn helps the second cavity 12 absorb the squeezing force and reduces the impact on the first cavity 11.

In some other embodiments, under the condition of ensuring the thermal conductivity of the thermal conductive member 16, the thermal conductive member 16 can have a hollow structure. That is, when the second cavity 12 is subjected to external force, the thermal conductive member 16 can collapse internally, so that the the second wall 14 can easily deform to ensure the buffering and energy absorption effect of the second cavity 12.

According to some embodiments of the present application, referring to FIG. 5, the angle between the themal conductive member 16 and the first wall 13 is a, where 45° ≤ a<90°.

"a" is the angle between the thermal conductive member 16 and the first wall 13, that is, the inclination angle between the thermal conductive member 16 and the first wall 13. "a" can be 45°, 50°, 55°, 60°, 65°, 70°, 80°, 85°, 86°, 87°, 88°, 89°, 89.5°, or any numerical value not less than 45° and less than 90°.

In the above solution, when the angle a between the themal conductive member 16 and the first wall 13 is <45°, under the condition that the size of the themal conductive member 16 is fixed, the smaller the gap between the second wall 14 and the first wall 13, the smaller the volume of the second cavity 12, and the smaller the squeezing force that can be absorbed. When the angle a between the themal conductive member 16 and the first wall 13 is 90°, the themal conductive member 16 can be perpendicular to the first wall 13 and the second wall 14. When the thermal management component 10 is subjected to squeezing force, it is not conducive to the deformation of the second cavity 12. That is, it is easy to transfer the squeezing force to the first cavity 11, affecting the safety of the battery 100. For this reason, the embodiments of the present application limit the angle a between the themal conductive member 16 and the first wall 13 to 45°≤a<90°, so that the second cavity 12 has better buffering capacity and ensures the safety of the battery 100.

According to some embodiments of the present application, please refer to FIG.s 3-5. The thermal conductive members 16 extend along the first direction y. There are a plurality of thermal thermal conductive members 16. The plurality of thermal conductive members 16 are are arranged at intervals along the second direction z, and the first direction y, the second direction z, and the thickness direction x of the thermal management component 10 are perpendicular to each other.

The first direction y and the second direction z are perpendicular to each other, and both are perpendicular to the thickness direction x of the thermal management component 10 respectively. In some embodiments, as shown in FIGs. 3-5, the first direction y is the length direction of the thermal management component 10, and the second direction z is the width direction of the thermal management component 10.

The thermal conductive member 16 is in a sheet shape, one side of the thermal conductive member 16 is connected to the first wall 13, and the other side of the thermal conductive member 16 is connected to the second wall 14. The plurality of themal conductive members 16 are arranged at intervals along the second direction z, and the themal conductive members 16 are parallel to each other, dividing the second cavity 12 into a plurality of small chambers. In some embodiments, along the first direction y, the size of the thermal conductive member 16 is the same as the size of the second wall 14. In other embodiments, the size of the thermal conductive member 16 may be smaller than the size of the second wall 14.

In the above solution, on the one hand, by arranging the plurality of themal conductive members 16, the thermal management effect of the medium in the first cavity 11 on the battery cells 30 facing away from the first cavity 11 can be ensured, so that the battery 100 has a higher safety. On the other hand, each thermal conductive member 16 extends along the first direction y, and two adjacent thermal conductive members 16 are parallel to each other in the second direction z, so that when the thermal management component 10 is subjected to squeezing force, the second cavity 12 can be evenly stressed and fully absorb the squeezing force.

According to some embodiments of the present application, referring to FIG. 5, the spacing between two adjacent thermal conductive members 16 is b, where 5mm≤b≤ 100mm.

In some embodiments, the spacing between adjacent thermal conductive members 16 may be the same. That is, in the second cavity 12, multiple thermal conductive members 16 are evenly arranged, and at this time, the spacing b between two adjacent thermal conductive members 16 is between 5mm and 100mm. For example, b can be 5mm, 6mm, 7mm, 8mm, 9mm, 10mm, 11mm..95mm, 96mm, 97mm, 98mm, 99mm, 100mm, or any numerical value not less than 5mm and not greater than 100mm.

In the above solution, when the spacing b between two adjacent thermal conductive members 16 is <5mm, the thermal conductive members 16 are densely distributed, which is not conducive to the deformation of the second cavity 12. When the spacing b between two adjacent thermal conductive members 16 is >100mm, the themal conductive members 16 are sparsely distributed, which is not conducive to the heat exchange efficiency between the first cavity 11 and the battery cells 30. For this reason, the embodiments of the present application limit the spacing b between two adjacent themal conductive members 16 to 5 mm ≤ b ≤ 100 mm, which can ensure that the temperature of the battery cell 30 is effectively adjusted, so that the second cavity 12 can effectively absorb the squeezing force, making the battery 100 highly safe.

In some embodiments, please refer to FIG.s 4 and 5, the edges of the first wall 13 and the second wall 14 are connected by a side wall 14a, the second cavity 12 is enclosed and formed by the first wall 13, the second wall 14, and the plurality of thermal conductive members 16 divide the second cavity 12 into several independent chambers. In other embodiments, no side wall 14a is provided between the edges of the first wall 13 and the second wall 14, the first wall 13 and the second wall 14 are connected through the themal conductive members 16, and the second cavity 12 can be formed by the first wall 13, the second wall 14, and the thermal conductive member 16s.

According to some embodiments of the present application, refering to FIG.s 4 and 5, the thermal management component 10 has a third wall 15, the first wall 13 and the third wall 15 are arranged oppositely along the thickness direction x of the thermal management component 10, and first cavity 11 is formed between the first wall 13 and the third wall 15.

The third wall 15 is a wall opposite to the first wall 13 in the thickness direction x of the thermal management component 10, and the first cavity 11 is formed between the first wall 13 and the third wall 15. The third wall 15 can be a thermal conductive connection component for the battery cell 30, and the surface heat of the battery cell 30 can be conducted to the heat exchange medium in the first cavity 11 through the third wall 15.

In the above solution, the third wall 15 and the first wall 13 are arranged oppositely along the thickness direction x of the thermal management component 10, and form a first cavity 11 that can accommodate the medium, so as to be able to adjust the temperature of the battery cell 30.

In some embodiments, referring to FIG 5, in the width direction of the thermal management component 10, the opposite ends of the third wall 15 and the opposite ends of the first wall 13 are respectively connected by the fourth wall 15a, so as to jointly enclosing the first cavity 11.

According to some embodiments of the present application, please refer to FIG. 5, the thermal management component 10 further includes: a reinforcement 17, which is disposed inside the first cavity 11, wherein one end of the reinforcement 17 is connected to the first wall 13, and the other end of the reinforcement 17 is connected to the third wall 15.

The reinforcement 17 is a structure disposed inside the first cavity 11 and connecting the first wall 13 and the third wall 15. The functions of the reinforcement 17 may include: improving the strength of the first cavity 11, reduce the risk of deformation of the first cavity 11 due to force, and ensuring that the volume of the first cavity 11 is relatively constant.

In the above solution, by arranging the reinforcement 17 in the first cavity 11, the structural strength of the first cavity 11 is improved, the risk of deformation of the first wall 13 and the second wall 14 due to the squeezing force is reduced, the volume of the first cavity 11 is ensured to be relatively constant, ensuring that the medium in the first cavity 11 is not affected by the squeezing force, so that the temperature of the battery cell 30 is effectively adjusted.

According to some embodiments of the present application, referring to FIG. 5, the reinforcement 17 is perpendicular to the first wall 13 and the third wall 15.

In some embodiments, the cross-section of the reinforcing member 17 may be block-shaped or sheet-shaped, with one end connected to the first wall 13 and the other end connected to the second wall 14. The angle between the reinforcing member 17 and the first wall 13 is 90°, and the angle between the reinforcing member 17 and the second wall 14 is 90°.

In the above solution, the squeezing force applied on the thermal management is mainly the expansion force of the battery cell 30, and the direction of the expansion force roughly corresponds to the thickness direction x of the thermal management component 10. When the thermal management component 10 is subjected to the squeezing force, the reinforcement 17 arranged perpendicularly to the first wall 13 and the third wall 15 can effectively resist the squeezing force and ensure that the first wall 13 and the third wall 15 do not deform, that is, it is ensured that the first cavity 11 does not deform.

In some embodiments, the reinforcing member 17 may extend along the first direction y, and a plurality of reinforcing ribs may be arranged at intervals along the second direction z.

According to some embodiments of the present application, please refer to FIGs. 4 and 5. the size of the first cavity 11 in the thickness direction x of the thermal management component 10 is w1, and the size of the second cavity 12 in the thickness direction x of the thermal management component 10 is w2, where 0.2≤ w1/w2 ≤ 1.5.

The size w1 of the first cavity 11 in the thickness direction x of the thermal management component 10 can be the width of the first cavity 11, and the larger w1 is, the more media the surface thermal management component 10 can accommodate; the size w2 of the second cavity 12 in the thickness direction x of the thermal management component 10 may be the width of the second cavity 12, and the larger w2 is, the better the buffering capacity of the second cavity 12 is.

w1/w2 can be 0.2, 0.3, 0.4, 0.5, 0.6, 0.7, 0.8, 0.9, 1.0, 1.1, 1.2, 1.3, 1.4, 1.5, or any numerical value not less than 0.2 and not greater than 1.5.

In the above solution, when w1/w2<0.2, it means that the thermal management component 10 has less volume to accommodate the medium, that is, the less medium that adjusts the temperature of the battery cell 30, the worse the thermal management effect is. When w1/w2>1.5, it means that the smaller the thickness of the second cavity 12, the worse its buffering capacity. For this reason, in the embodiment of the present application, w1/w2 is limited to 0.2≤w1/w2≤1.5, so that the thermal management component 10 has better buffering capacity under the condition of strong thermal management effect, which enables the battery 100 to have higher safety.

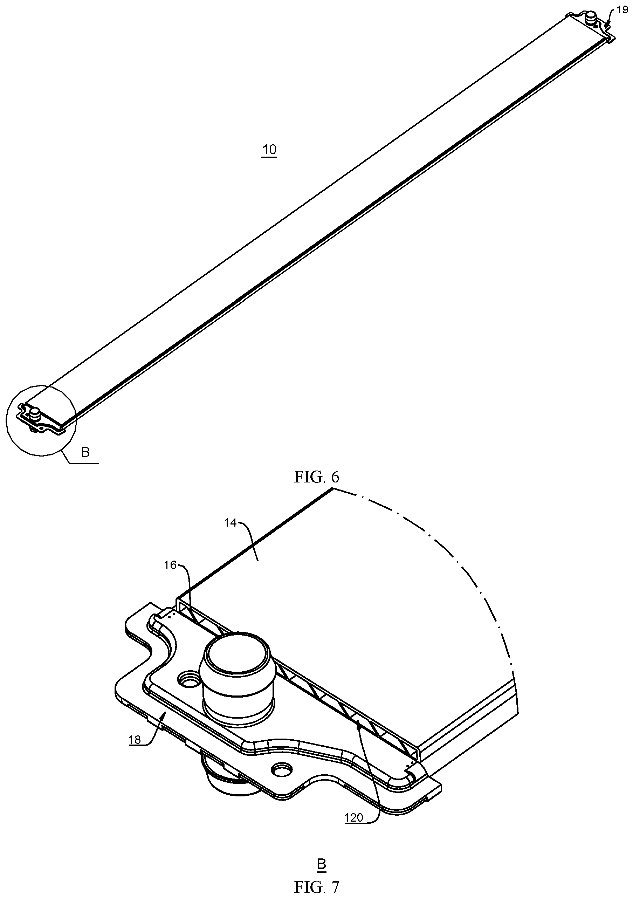

According to some embodiments of the present application, please combine FIG.s 6 and 7. FIG. 6 is a perspective view of the thermal management component 10 provided in some embodiments of the present application. FIG. 7 is an enlarged view of B in FIG. 6 in some embodiments of the present application. The second cavity 12 has a first opening 120 and a second opening opposite to each other along a first direction y. The first opening 120 and the second opening communicate with the inside of the first cavity 11 respectively. The first direction y is perpendicular to the thickness direction x of the thermal management component 10.

"First opening 120" and "second opening" may mean that the opposite ends of the second cavity 12 are open in the first direction y (such as the length direction of the thermal management component 10), and the second cavity 12 is connected to the outside at the opposite ends.

In the above solution, compared with the solution in which the opposite ends are closed, the two ends of the second cavity 12 are open, and can deform more easily and absorb energy when subjected to the squeezing force, thereby having better buffering. ability to effectively reduce the impact of the squeezing force on the first cavity 11, so that the battery 100 has higher safety.

According to some embodiments of the present application, please refer to FIG.s 6 and 7, the thermal management component 10 further includes a first current collector 18 and a second current collector 19, which are respectively connected with the two opposite ends of the first cavity 11 arranged along the first direction y, and the first direction y is perpendicular to the thickness direction x of the thermal management component 10.

Along the first direction y (such as the length direction of the thermal management component 10), the first current collector 18 and the second current collector 19 are arranged oppositely, the first current collector 18 is communicated with one end of the first cavity 11, and the second current collector is communicated with the other end of the first cavity 11. The first current collector 18 may be formed with an inlet through which the heat exchange medium may enter the first cavity 11. The second current collector 19 may be formed with an outlet through which the heat exchange medium may be discharged from the first cavity 11.

Referring to FIG.s 6 and 7, in some embodiments of the present application, the first current collector 18 will not block the first opening 120, and the second current collector 19 will not block the second opening.

In the above solution, by arranging the first current collector 18 and the second current collector 19, the medium can be input into the first cavity 11, and can also be output from the first cavity 11 to realize the circulation of the medium, so that the temperature of the battery cell 30 is adjusted effectively. In some embodiments, in the battery 100, a plurality of battery cells 30 are arranged in a stack, and a plurality of thermal management components 10 are respectively disposed between two adjacent battery cells 30. The inlet of the first current collector 18 of each thermal management component 10 can be communicated with each other, and the outlet of the second current collector 19 of each thermal management component 10 can be communicated with each other, so that the thermal management components 10 are arranged in parallel.

According to some embodiments of the present application, the present application further provides a battery 100. The battery 100 includes a box 20, battery cells 30, and the thermal management component 10 described above. The battery cells 30 are accommodated in the box 20. The thermal management component 10 is disposed in the box 20, and is configured to adjust the temperature of the battery cells 30.

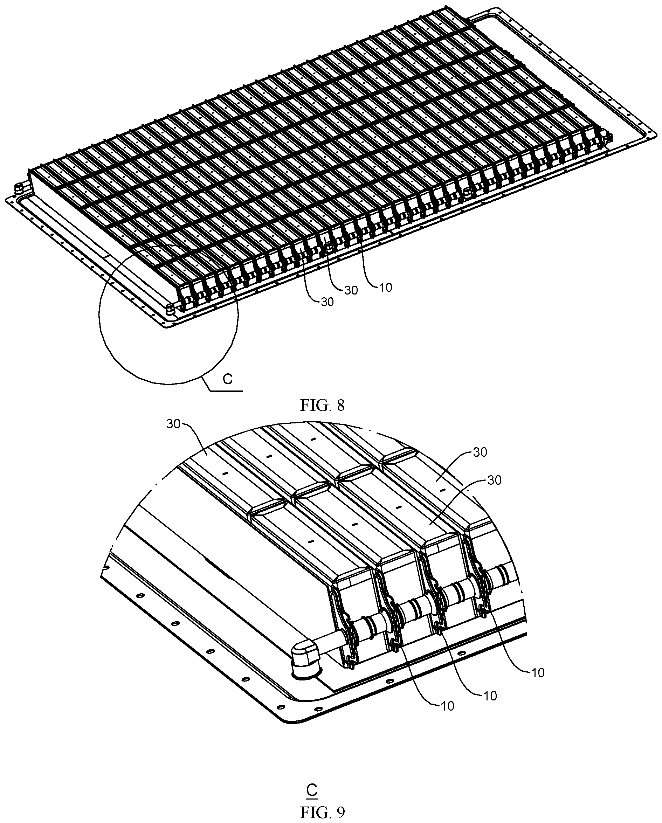

According to some embodiments of the present application, please combine FIG.s 8 and 9. FIG. 8 is a schematic diagram of the battery cells 30 and the thermal management component 10 provided in some embodiments of the present application. FIG. 9 is an enlarged view of C in FIG. 8.

Battery cells 30 are provided on both sides of the thermal management component 10 in the thickness direction x.

In some embodiments, along the thickness direction x of the thermal management component 10, multiple columns of battery cells 30 stacked on each other are provided in the box 20. Each column of battery cells 30 includes a plurality of battery cells 30 stacked on each other along the length direction of the thermal management component 10. There are multiple thermal management components 10, where one thermal management component 10 is disposed between two adjacent columns of battery cells 30, and each thermal management component 10 can adjust the temperature of all the battery cells in the two adjacent columns of battery cells 30.

According to some embodiments of the present application, some embodiments of the present application further provide a power consuming device, which includes the battery 100 described above. The battery 100 is used to provide electrical energy.

According to some embodiments of the present application, the present application further provides a thermal management component 10, please refer to FIG.s 3-7. The thermal management component 10 can be a water-cooling plate. When applied to the battery 100, the thermal management component 10 can be disposed between the large surfaces of two battery cells 30, that is, the two battery cells 30 can be disposed on both sides of the thermal management part in the thickness direction x, respectively.

A first cavity 11 and a second cavity 12 are formed inside the thermal management component 10, and the first cavity 11 and the second cavity 12 are arranged along the thickness direction x of the thermal management component 10. The first cavity 11 is configured to accommodate a heat exchange medium for heat exchange with the battery cells 30, so as to adjust the temperature of the battery cells 30. The second cavity 12 does not accommodate the heat exchange medium, and is configured to deform to absorb the squeezing force applied on the thermal management component 10.

The thermal management component 10 includes a third wall 15, a first wall 13, and a second wall 14. Along the thickness direction x of the thermal management component 10, the third wall 15 and the second wall 14 are the sides away from the first wall 13. The first cavity 11 is formed between the third wall 15 and the first wall 13, and the second cavity 12 is formed between the first wall 13 and the second wall 14. In some embodiments, the third wall 15 is in contact with a large surface of the battery cell 30, and the second wall 14 is in contact with a large surface of another battery cell 30.

In order to ensure that the heat exchange medium in the first cavity 11 can perform heat exchange with the battery cells 30 in contact with the second wall 14, a thermal conductive member 16 is provided in the second cavity 12. The function of the thermal conductive member 16 includes themal conduction. To ensure that the second cavity 12 can deform smoothly, the themal conductive member 16 is inclined relative to the first wall 13 and the second wall 14. In some embodiments, the thermal conductive member 16 may be in the form of sheet, extending along the length direction of the thermal management component 10, and the plurality of thermal conductive members 16 may distributed at intervals along the width direction of the thermal management component 10. To ensure that the second cavity 12 can deform smoothly, the opposite ends of the second cavity 12 are open in the length direction of the thermal management. In order to improve the structural strength of the first cavity 11 and reduce the risk of deformation of the first cavity 11 due to force, a reinforcing member 17 may be provided inside the first cavity 11, and the reinforcing member 17 is vertically connected to the first wall 13 and the third wall 15.

The above is only preferred embodiments of the present application, and is not intended to limit the present application. For those skilled in the art, the present application may have various modifications and changes. Any modifications, equivalent replacements, improvements, etc. made within the spirit and principles of this application shall be included in the protection scope of this application.

## Claims

1. A thermal management component, applicable to a battery, wherein a first cavity and a second cavity are formed inside the thermal management component, and the first cavity and the second cavity are arranged along a thickness direction of the thermal management component, wherein the first cavity is configured to accommodate a heat exchange medium to adjust a temperature of a battery cell, and the second cavity is configured to absorb an squeezing force on the thermal management component through deformation.

2. The thermal management component according to claim 1,
wherein the thermal management component is provided with a first wall shared by the first cavity and the second cavity.

3. The thermal management component according to claim 2,
wherein the thermal management component is provided with a second wall, the first wall and the second wall are arranged oppositely along the thickness direction of the thermal management component, and the second cavity is formed between the first wall and the second wall.

4. The thermal management component according to claim 3,
wherein the thermal management component further comprises:
a thermal conductive member, disposed inside the second cavity, wherein one end of the thermal conductive member is connected to the first wall, and the other end of the thermal conductive member is connected to the second wall.

5. The thermal management component according to claim 4,
wherein the thermal conductive member is inclined to the first wall and the second wall.

6. The thermal management component according to claim 5,
wherein an angle between the thermal conductive member and the first wall is a, where 45°≤a<90°.

7. The thermal management component according to any one of claims 4-6,
wherein the thermal conductive member extends along a first direction, wherein there are a plurality of the thermal conductive members, which are arranged at intervals along a second direction, wherein the first direction, the second direction, and the thickness direction of the thermal management component are perpendicular to each other.

8. The thermal management component according to claim 7,
wherein a spacing between two adjacent thermal conductive members is b, where 5mm≤b≤100mm.

9. The thermal management component according to any one of claims 2-8,
wherein the thermal management component is provided with a third wall, the first wall and the third wall are arranged oppositely along the thickness direction of the thermal management component, and the first cavity is formed between the first wall and the third wall.

10. The thermal management component according to claim 9,
wherein the thermal management component further comprises:
a reinforcement member, arranged inside the first cavity, wherein one end of the reinforcement member is connected to the first wall, and the other end of the reinforcement member is connected to the third wall.

11. The thermal management component according to claim 10,
wherein the reinforcement member is perpendicular to the first wall and the third wall.

12. The thermal management component according to any one of claims 1-11,
wherein a size of the first cavity in the thickness direction of the thermal management component is w1, and a size of the second cavity in the thickness direction of the thermal management component is w2, where 0.2≤w1/w2≤1.5.

13. The thermal management component according to any one of claims 1-12,
wherein the second cavity is formed with a first opening and a second opening opposite to each other along a first direction, and the first opening and the second opening are respectively communicated with an inside of the first cavity, wherein the first direction is perpendicular to the thickness direction of thermal management component.

14. The thermal management component according to any one of claims 1-13,
wherein the thermal management component further comprises a first current collector and a second current collector, and the first current collector and the second current collector are respectively connected to two ends of the first cavity which are arranged oppositely along a first direction, wherein the first direction is perpendicular to the thickness direction of the thermal management component.

15. A battery, comprising:
a box;
a battery cell, accommodated in the box; and
the thermal management component according to any one of claims 1 to 14, disposed in the box, and configured to adjust a temperature of the battery cell.

16. The battery according to claim 15,
wherein the battery cells are arranged on both sides of the thermal management component in the thickness direction.

17. A power consuming device, comprising the battery according to claim 15 or 16, wherein the battery is configured to provide electrical energy.
